# EUROPEAN PATENT SPECIFICATION

(11) **EP 4 609 589 B1**
(45) Date of publication and mention of the grant of the patent: **25.11.2026**
(21) Application number: 23790360.4
(22) Date of filing: 20.10.2023
(51) Int. Cl.: H04L 67/12, H04L 67/52, H04L 67/60, G08G 1/00, G01C 21/34, G06Q 50/40

(54) **CENTRALIZED MANAGEMENT OF DATA TRANSPORT**
ZENTRALISIERTE VERWALTUNG VON DATENTRANSPORT
GESTION CENTRALISÉE DE TRANSPORT DE DONNÉES

(30) Priority: 24.10.2022 EP 22306607
(43) Date of publication of application: 03.09.2025
(73) Proprietor: Telit Cinterion Deutschland GmbH, 81541 München (DE)
(72) Inventor: BREUER, Volker, 16727 Botzow (DE); DEMARTY, Joel, 13705 La Ciotat (FR)
(74) Representative: Pearl Cohen UK
(86) International application number: PCT/EP2023/079278
(87) International publication number: WO 2024/088897

(56) References cited:
- US-A1- 2018 376 357

## Description

### FIELD OF THE INVENTION

The present invention relates to a method to manage needs of communication devices for data transport between their position and a targeted receiver of the data.

The invention also pertains to a data transport platform and to a transport device implementing the method of the invention. The invention also relates to a communication device able to request data transport of the invention.

### BACKGROUND OF THE INVENTION

Low-capability devices such as NB-IoT or Cat-M used for meters and other power sensitive low throughput applications are often difficult to reach from network and vice versa. More precisely, such devices require high power transmission. Also, due to bad propagation conditions and technical limitations, such devices have only small reception throughput.

Furthermore network throughput for such devices is limited, limited in capability and also limited according to contractual conditions. For example, a meter has only very small data volume in its normal operation. Hence, when a software upgrade or a new application software is required such data sizes, even when being differential updates, such operation can exceed the amount and often the capacity of said NB-IoT/Cat-M device. Furthermore the desired throughput may also be above the normal considered and contractual throughput for said device.

Today, devices make data transport via a traditional network path. The problem to solve is to ease data transport in a power and cost efficient way. This should apply to any kind of devices even if low-capability devices would have the highest benefit out of it.

Further alternative and advantageous solutions would, accordingly, be desirable in the art.

US20180376357A1discloses a self-organized, dynamically configurable communication network architecture for fleets of autonomous vehicles (AVs).

### SUMMARY OF THE INVENTION

The present invention aims at enabling adjustable data transmission discharge from a device having data to be transported to an offloading point in a network.

The present invention is defined, in its broadest sense, as a method according to claim 1.

The invention enables to manage transport of data using sidelink to transfer data to other devices around, which will transport data on behalf of the device which let the data be transfered. It enables a network offloaded traffic transport by use of sidelink in a kind of "Uber" way. Typically a transport device moving from a pickup position where the data are uploaded where no network is available will move in any case at one point of time or another towards a place where a public network will be available as soon as it moves.

It is here noted that the invention can be implemented without any movement of the transport device, typically in case of too large amount of data to be transported for an IoT requesting device. However the preferred embodiment of the invention is to use the physical movement of the transport device which is very innovative for data transport.

Compared to normal sidelink, the invention thus enables a data transport on a remarkable distance of the way to the server i.e. a geographical distance from device to network point, to be performed by non-communicative means, but using physical carry only. It necessitates provision of location updates from the transport devices to the data transport platform. The invention thus implement data transport via sidelink where data are carried physically with other devices to a distant network entry point. It reduces device throughput and enables corresponding payments/battery saving.

The present invention is a kind of sidelink-"Uber" for data. It makes the sidelink function to evolve. The new inventive method is elaborated as a data transport being offered as a service via sidelink of devices and feeding said data after physical transport into an network access point, typically an open access point. The data are transported on a remarkable part of the way in a stored transport format and being carried by other means than communication means.

The service is intended but not restricted to such network low capability throughput devices. One simple use case is picking up own meter data at home and uploading them at a public entry point to save network resources and energy for the meter device. In certain cases such as SW update for meters, the transport load/amount of data may otherwise exceed the capacity or volume ordered via the network link especially when only having a contract for typical meter load, i.e. certain amount of small reports. Hence a transport via simple sidelink from or to the device is beneficial.

The invention enables to monitor storage and forwarding of data in transport devices. It is characterized by the possibility to make a geographical remarkable part of the way for the data in a stored transport format and being carried by other devices than the requesting device.

With the method, devices having said service active and being at a certain location will activate their sidelink to transfer data to be transported. With such an "Uber" sidelink, the low end device saves energy and can be placed on a low normal data throughput contract. The seldom huge amount of data will be transported by other devices.

The invention proposes a new usage of the sidelink, i.e. any kind of device to device communication, via a centralized management of data transport, loading and offloading. The invention is distinct from other usage of sidelink which can be simple storage or forwarding via sidelink. The invention is considered to be used and promoted as an entire service.

In an advantageous use case, the invention specifically enables data transport to be performed even for devices not being in reach of a network. The invention also saves network resources by making a network bypass.

With the invention, any device having throughput above its normal average, i.e. exceeding the throughput limit or draining the battery, may thus use instead its sidelink to transport/offload said data to a device in proximity. So one of the major feature of the invention is activity steering of sidelink especially but not limited to a band being not under network control by a position match with information received by a server. Steering, i.e. increasing or decreasing sidelink activity, in dependency of a momentary position which matches to the position provided by a server is not known. Such transport devices have thus high side link sensing and signal emission density when being in proximity to an agreed pick-up place for the data as was received by the server. Hence said application influences the sidelink and sensing behaviour.

The transport devices pick up data and transport them within a certain time to a public or accessible network entry point. Giving that most of the data are non-critical communication, activities via the network can be started in case of not having received announced data or in case data which have being picked-off being declared as delivered.

In any case, the invention proposes the use of the sidelink instead of network direct uploading. It is a cost efficient and resource/cost saving alternative for transport of larger amount of data exceeding network capacity or agreed limits.

According to an advantageous feature, a common secret is provided to the requesting communication device and to the transport device with respectively the information about the selected transport device and with the data transport mission.

Such a feature of exchanging a secret enables to secure the transfer of the data between the requesting device and the transport device. Also it enables to ensure that the transport device is the correct one while entering in contact with the requesting device via sidelink. The secret is typically generated by the platform upon agreeing on transport request. Another embodiment is to maintain a master secret which can be adapted/altered for every devices being registered at the platform, taking one specific physical value of the transporting device into account. The secret is then alternatively generated by the transport device upon agreeing on the request as well as by the requesting device. The server may indicate to the requesting device which will be the transporting device and hence can also alter/adapt the secret accordingly and verify the transporting device.

According to an advantageous feature, the offloading point is a public network or an open LAN point.

Such a feature corresponds to an offloading in any point of the public network. This is very valuable for isolated devices having rare, limited in data or no connection to the network. It enables such isolated IoT devices to be able to have big amount of data transported.

According to a preferred embodiment, the method comprises a step of determination of a cost for the data transport and a step of proposing an associated price with respectively the information about the selected transport device and with the data transport mission.

Such an embodiment enables to implement an economical aspect to the data transport management according to the invention. Invoicing of the data transport service is thus implemented. It can also be used by the transport device to agree on request having a minimum volume of data to transport. It necessitates for the requesting device to be also registered with identifier at the data transport platform in the network. It also enables to manage extra payments when a maximum of volume is exceeded or any kind of invoicing for specific encountered situations. For example, a very distant offloading point would generate higher costs.

The invention also relates to a data transport platform according to claim 6.

Such a data transport platform populates the method of the invention enabling the centralized management of outsourced data transport for requesting communication devices. The data transport platform of the invention organizes the "Uber" for data of the method of the invention.

Advantageously, data transport platform is run as a web service.

Such an implementation enables easy connection for the requesting devices as well as for transport devices. Typically applications installed in the two kinds of devices enable their connections and exchanges with the platform.

According to an advantageous feature, the platform has an availability monitor configured to monitor availability of transport devices and thus to generate the list of available transport devices.

Such an availability monitor enables the platform to centralized the calls for mission from the transport devices, keeping them stored in order to allocate missions accordingly by physical positions match with anyone of the requesting devices.

Thus advantageously, the availability monitor is configured to answer to transport devices checking the presence of data to transport at the data transport platform.

Such a functioning is favourable as working as a pull-push mode. This embodiment is however not in exclusion of other kind of management of the missions for example a passive monitoring of the availability of the transport devices in certain positions without needing them to call for missions. A passive database of transport devices can be established to implement a push mode of missions. It is here noted that a pull-push and the push mode can cohabitate in a same platform in order to optimize the functioning of the invention.

Also, advantageously, the platform is configured to monitor and store physical trajectories from the listed transport devices, enabling a physical data transport from the position of the requesting communication device and the offloading position.

Such a feature enables to monitor and to use physical displacements of the transport devices in a controlled way. The invention already uses such physical displacements by default. The method of the invention, in the broadest way, thus already concerns any kind of physical transport of data from one point to another by the transport device. Meanwhile, with the last feature, such displacements are not only used but also monitored enabling to take them into account for the determination of a best suited transport device to take over for a given request.

The invention also relates to a transport device according to claim 11.

Such transport device in proximity which takes data to be transported needs to be registered at the platform of the invention, i.e. being trusted as transporter of data.

Typically a corresponding application adapted to influence the sidelink behaviour according to the above outlined scenarios related to transporter and offloading device.

According to an advantageous feature, said transport device is configured to regularly check the presence of data to transport at the data transport platform.

Such a feature enables the transport device to be active in the attribution of the missions. Thus the platform can push missions only to transport devices which made such check, attesting accordingly their availability.

At last the invention relates to a communication device according to claim 13.

Such a requesting device benefits of the invention as soon as it transfer data to be transported to any transport device. It is able to request data transport outsourcing at the service of the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically shows the context of the invention;
- Figure 2 is a flowchart of the method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein. The invention is defined by the appended claims. The same elements have been designated with the same references in the different drawings. For clarity, only those elements and steps which are useful to the understanding of the present invention have been shown in the drawings and will be described.

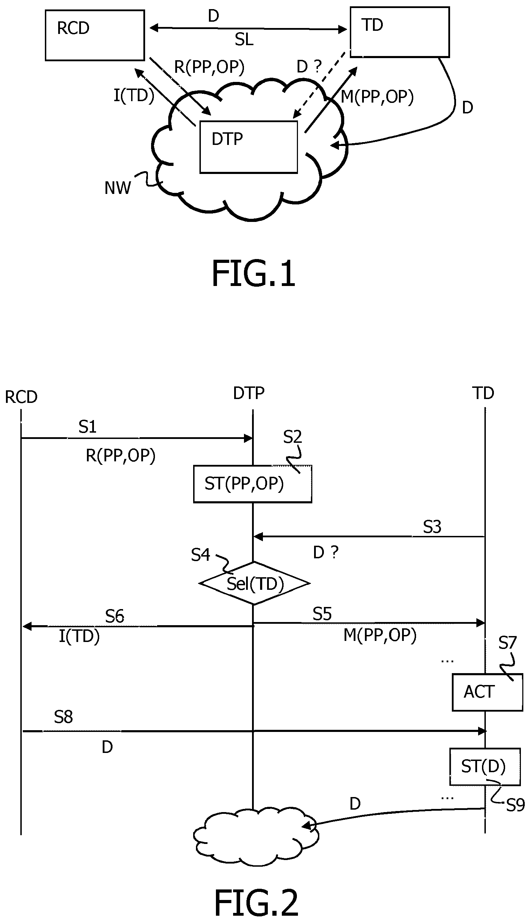

Figure 1 schematically shows the context of the invention;

A communication device RCD, typically an internet of things (IoT) device has data for transport. Such a device RCD is a low end devices which may use normally their throughput capabilities towards the network. Due to bad placement of the device RCD, the required energy for the transport may be accordingly high and correspondingly charged when exceeding the normally considered transport. Such devices need discharge for the data to be transported. This maybe because the network coverage changed, the network is in outage or it is in general in an area without coverage. Hence the device may use its sidelink and the method of the invention to transfer a message to a UE in proximity being intended to be forwarded to some specific network node including its latest position estimate. The pickup position can also be an estimate where said message was fed into the network/open LAN. More precisely, when a device communicates with a network, first the network entry point is known, which gives already a first estimate on the position depending whether it is a wide area or hot spot. Combining the Cell-Id of the injecting point with additional measurements such as AOA (angel of arrival), TA (timing advance), or even neighbour cell measurement report or general surrounding information from the requesting device may be used to further drive the position of the device. Especially for meters being deployed for a certain consumer/location which is known at least by the service provider and could be made accessible to said uber-service organizing server for position derivation of the requesting device.

The invention is a service offered to such requesting devices. Typically an application is installed on-board the requesting device to form request and manage any possible invoicing and other aspects of the invention. The application behaves as outlined to be efficient in a Uber for data scenario.

For this purpose and according to the invention, the communication device RCD has access to a data transport platform DTP. The data transport platform DTP is typically part of a network NW or connected to a network NW. It is typically a web service implemented in a server on the network NW. Such an access is typically provided via an application installed on-board the communication RCD. Other type of access can be contemplated in the implementation of the invention. In addition the invention can be implemented using various server being interconnected i.e. from the service provider owning the requesting device and the server of the transport organizing the service.

The data transport platform DTP has a list of available transport device TD available to offer sidelink SL data transport resources. Those transport devices TD are stored with their current positions. Such transport devices TD are adapted to open a sidelink SL with the requesting communication device RCD.

Transport devices TD are previously registered. It can be done via an application installed on-board of the transport devices enabling them to register as transport device. Advantageously, the transport device TD also indicates, at the time of registration, common routes done on a daily basis and extra way one would be willing to do.

Also, for example, cars on their way to work or other with communication means equipped vehicles having a pre-described and known routes can be included in said transport. They will be involved in data transport when pick-up and drop off is on said route. Such transport devices advantageously notify the service platform of any occasion triggered when being in proximity of a requesting communication device. They can also advantageously declare themselves as service devices periodically and make location update. The pickup position could also be displayed in an application of the transporting device and also indicating whether transfer for the transported data was completed and where is next pick-up location for another device or drop-off point. Hence such an application in a transporting device could also modify the route of the transporting device within certain limits to optimize the transport for multiple devices within a certain range.

By registering to the service of the invention, the transport devices can get an offer to hence reduce their own transport costs for certain transport activities whilst other transports may still need to be paid. This can be made dependent on region and distance between data pick-up and offloading point, which could also be the private LAN at home.

So transport capability and methods to overtake data are included in the profile of each transport device TD. Such a transport device TD can have a registration as professional transporter of data.

Figure 2 is a flowchart of the method of the invention.

At the beginning of the method, the communication device RCD has data to be transported from a pick-up place and a drop-off place, i.e. a public network or open LAN point.

In a step S1, it thus sends a request R(PP,OP) comprising its position PP where data are to be picked-up and an offloading position OP to a data transport platform DTP. Advantageously an amount of data to be transported is also included in the request R. Advantageously, the amount of data transported is further monitored in the platform and in the corresponding application. It can then be displayed or charged accordingly.

In a step S2, the server platform DTP stores the pick-up position PP and the offloading position OP and, if available, the amount of data to be transported.

In parallel, transport devices regularly check the presence of data as illustrated by step S3 on figure 2 and by an interrupted line on figure 1.

In a step S4, the platform DTP selects Sel(TD) at least one transport device TD to be used for data transport.

Advantageously the platform determines a best transporter for a given communication device having data to transport regarding the position of the given communication device where data have to be picked-up and the position of the offloading point.

In a step S5, the platform sends a transport mission M(PP,OP) comprising the pick up position PP and the offloading position PP. A quantity of data to be taken over is also advantageously included in the transport mission M.

Advantageously a secret or information on the transporting device which can be used in combination with a pre-known key/master to generate a secret, is also communicated at this moment in order for the later communication between the two devices to be secured.

Also an information I(TD) about the selected transport device TD to take over the data transport is sent to the requesting device RCD in a step S6. When a secret is used to secure the future communication of the data D, it is also transmitted with the information I(TD). The requesting communication device RCD and transport device TD can also exchange a secret so that the correct transport device TD is identified and back signalled to the platform DTP.

Once the transport device TD has reached the pick-up position PP, it activates high sidelink sensing and signal emission density in a step S7. The activation is thus done according to a given received request when being in proximity to the agreed pick-up position PP.

The requesting communication device RCD is for example such that it may not have its network connection and/or its sidelink always active for power saving reasons. Hence a meter device may activate its sidelink upon presence or touch by another device and hence not even have a network connection active when the transport device is coming.

There may also be a class of meter or sensors which collect data longtime and do not even have a network subscription connection active. Hence they may also activate their sidelink upon touch or presence detection of a transporter.

In a step S8, data D are then uploaded by the transport device TD directly from the requesting communication device RCD using sidelink SL between the two devices. This uploading of data D is advantageously made using a secret or credentials.

The transport device TD then stores the data D in a step S9. Once it is in proximity to the agreed offloading position OP, it offloads the data D to the offloading point. Typically this point is in a public network or is an open LAN point. The transport device TD has thus simply moved geographically to an open network point. In case the transport device TD has flat rate also direct communication with the network NW may be used to offload data D.

If ever needed, the transport device TD can again activate sidelink and sensing to use the sidelink to offload the data D to the offloading point.

In this case, the targeted communication device, typically an IoT device, is informed of the transport device presence. Advantageously, credentials or secret are here also used to secure the communication of the data D. The targeted IoT device in the network NW thus receives data via sidelink.

Once data D are received by the appropriate server or device in the network, the transporter device is informed of successful delivery. It triggers new checking of the presence of data to be transported in the vicinity of the transport device TD.

Once data are delivered the transport device TD may move directly or within a given time limit towards a free network access point.

The transport is typically paid by the requesting communication device RCD or their owners which need to have this network offload traffic transport. It can be implemented that a share is for the service provider and roaming part is for the requesting communication device or its owner who agreed on the transport. The invention can thus enables to make money on the by-pass.

The invention proposes a kind of "Uber" for data. "Uber" as a person transport means is widely known, deployed and used. According to this system, private persons being registered at a platform offer transport means for persons alongside taxis and public transportation. The invention applies in a totally distinct field where such a principle is totally unknown.

The following advantages are thus provided by the invention. The invention enables large amount of data transport in an efficient way for low end devices with limited traffic capabilities via the public network. Such a limitation can be either by the power that would need to be spend, typically when placed indoor, or traffic volume exceeding the agreed transport volume with the MNO. The network traffic offloading of the invention solves these limitations. The invention further allows users to benefit from their daily activities, i.e. transporting data from their home meter to public network entry points or on their way to work. The overall procedure saves electricity and network resources placing them in areas where efficiently needed.

Besides, the invention enables people to earn money by offering data transport at the "Uber" for data platform. For the people being less interested in gaining money, it encourages people save energy and doing some support to others. In parallel, there can also be registration as professional transporter according to the invention. Typically, in such a case, such transporter will be cheaper than service team member for transporting larger amount of data to or from a certain communication equipment.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. A method to manage, in a centralized way by a data transport platform (DTP), requests from internet of things IoT, communication devices (RCD) having needs for physical transport of data between positions of the IoT communication devices where data are to be picked-up and an offloading position, said data transport platform comprising a list of registered transport devices (TD) offering sidelink data transport resources stored with positions of the registered transport devices,
said method comprising the steps of, by the data transport platform:
- receiving a request from an IoT communication device having needs for physical transport of data, the request comprising a pickup position, which is a position of the IoT communication device where data are to be picked-up, and an offloading position,
- selecting a transport device from the list of registered transport devices according to a position of the transport device at the time of the request relative to the position of the IoT communication device,
- sending to the selected transport device a data transport mission, the data transport mission comprising the pickup position and the offloading position, and
- sending to the IoT communication device information about the selected transport device in order to connect via sidelink to the selected transport device for the selected transport device to take over the physical transport of data.

2. The method of claim 1, further comprising, by the selected transport device, once the selected transport device has reached the pickup position:
activating high sidelink sensing and signal emission density according to the data transport mission when the selected transport device is in proximity to the pickup position,
uploading the data to be transported from the IoT communication device,
storing the uploaded data, and
offloading the uploaded data upon reaching the offloading position.

3. The method according to claim 1, comprising providing a common secret to the IoT communication device and to the selected transport device, the common secret comprising information about the selected transport device and the data transport mission.

4. The method according to one of the preceding claims, wherein the offloading position comprises an offloading point which is a public network or an open LAN point.

5. The method according to one of the preceding claims, comprising a step of determining a cost for the physical transport of data and proposing a price associated with the physical transport of data along with the information about the selected transport device and the data transport mission.

6. A data transport platform (DTP) for centralizing needs for physical transport of data from internet of things, IoT, communication devices (RCD), said data transport platform comprising a list of registered transport devices (TD) offering sidelink data transport resources stored with their positions, said data transport platform comprising a request manager configured to:
receive a request from an IoT communication device having needs for physical transport of data, the request comprising a pickup position which is a position of the IoT communication device where data are to be picked up and an offloading position,
select at least one transport device from the list of registered transport devices according to a position of the transport device at the time of the request relative to the position of the IoT communication device,
send a data transport mission to the selected transport device, the data transport mission comprising the pickup position and the offloading position, and
send to the IoT communication device information about the selected transport device in order to connect via sidelink to the selected transport device for the selected transport device to take over the physical transport of data .

7. The data transport platform according to claim 6, wherein said data transport platform is provided as a web service.

8. The data transport platform according to claim 6, comprising an availability monitor configured to monitor an availability of the registered transport devices and thus to generate a list of available transport devices of the registered transport devices.

9. The data transport platform according to one of claims 6 to 8, wherein the availability monitor is configured to answer to transport devices that check with the data transport platform the presence of the data to be transported.

10. The data transport platform according to one of claims 6 to 9, configured to monitor and store physical trajectories of the registered transport devices to enable a physical transport of the data from the pickup position to the offloading position.

11. A transport device (TD) offering sidelink resources for physical transport of data and being preliminary registered at a data transport platform (DTP) of one of claims 6 to 10, said transport device comprising a data transport manager configured to:
receive, from the data transport platform, a data transport mission comprising a pickup position which is a position of an internet of things, IoT, communication device, having needs for physical transport of data, (RCD) where data are to be picked up, and an offloading position;
activate high sidelink sensing and signal emission density according to the data transport mission upon reaching a proximity of the pickup position;
uploading via sidelink the data to be transported from the IoT communication device, once a sidelink is established with the IoT device;
storing the uploaded data; and
offloading the uploaded data upon reaching the offloading position.

12. The transport device according to claim 11, configured to regularly check the presence of the data to be transported with the data transport platform.

13. An internet of things, IoT, communication device (RCD) having needs for physical transport of data between a pickup position which is a position of the IoT communication device where data are to be picked up and an offloading position, said IoT communication device configured to:
access a data transport platform (DTP) according to one of claims 6 to 10;
submit a request for data transport including the pickup position and the offloading position;
receive information about a transport device (TD) selected by the data platform in order to connect via sidelink to the transport device for the selected transport device to take over the physical transport of data; and
transmit the data to the transport device via sidelink once a sidelink is established with the transport device.

## Patentansprüche

1. Verfahren zur Verwaltung von Anforderungen von Kommunikationsvorrichtungen (RCD) des Internets der Dinge, IdD, auf eine zentralisierte Weise durch eine Datentransportplattform (DTP), die einen Bedarf eines physischen Transports von Daten zwischen Positionen der IdD-Kommunikationsvorrichtungen, an denen Daten aufzunehmen sind, und einer Abladeposition aufweisen, wobei die Datentransportplattform eine Liste von registrierten Transportvorrichtungen (TD) umfasst, die Sidelink-Datentransportressourcen anbieten, die mit Positionen der registrierten Transportvorrichtungen gespeichert sind,
wobei das Verfahren die Schritte durch die Datentransportplattform umfasst:
- Empfangen einer Anforderung von einer IdD-Kommunikationsvorrichtung, die einen Bedarf eines physischen Transports von Daten aufweist, wobei die Anforderung eine Aufnahmeposition, die eine Position der IdD-Kommunikationsvorrichtung ist, an der Daten aufzunehmen sind, und eine Abladeposition umfasst,
- Auswählen einer Transportvorrichtung aus der Liste von registrierten Transportvorrichtungen gemäß einer Position der Transportvorrichtung zur Zeit der Anforderung in Bezug auf die Position der IdD-Kommunikationsvorrichtung,
- Senden einer Datentransportmission an die ausgewählte Transportvorrichtung, wobei die Datentransportmission die Aufnahmeposition und die Abladeposition umfasst, und
- Senden von Informationen zu der ausgewählten Transportvorrichtung an die IdD-Kommunikationsvorrichtung, um sich mittels Sidelink mit der ausgewählten Transportvorrichtung zu verbinden, damit die ausgewählte Transportvorrichtung den physischen Transport von Daten übernimmt.

2. Verfahren nach Anspruch 1, ferner umfassend durch die ausgewählte Transportvorrichtung, sobald die ausgewählte Transportvorrichtung die Aufnahmeposition erreicht hat:
Aktivieren von hoher Sidelink-Erfassung und Signalemissionsdichte gemäß der Datentransportmission, wenn die ausgewählte Transportvorrichtung in der Nähe der Aufnahmeposition ist,
Hochladen der Daten, die von der IdD-Kommunikationsvorrichtung zu transportieren sind,
Speichern der hochgeladenen Daten, und
Abladen der hochgeladenen Daten bei Erreichen der Abladeposition.

3. Verfahren nach Anspruch 1, umfassend ein Bereitstellen eines gemeinsamen Geheimnisses an die IdD-Kommunikationsvorrichtung und an die ausgewählte Transportvorrichtung, wobei das gemeinsame Geheimnis Informationen zu der ausgewählten Transportvorrichtung und der Datentransportmission umfasst.

4. Verfahren nach einem der vorhergehenden Ansprüche, wobei die Abladeposition einen Abladepunkt umfasst, der ein öffentliches Netzwerk oder ein offener LAN-Punkt ist.

5. Verfahren nach einem der vorhergehenden Ansprüche, umfassend einen Schritt eines Bestimmens von Kosten für den physischen Transport von Daten und eines Vorschlagens eines Preises, der mit dem physischen Transport von Daten assoziiert ist, zusammen mit den Informationen zu der ausgewählten Transportvorrichtung und der Datentransportmission.

6. Datentransportplattform (DTP) zum Zentralisieren eines Bedarfs eines physischen Transports von Daten von Kommunikationsvorrichtungen (RCD) des Internets der Dinge, IdD, wobei die Datentransportplattform eine Liste von registrierten Transportvorrichtungen (TD) umfasst, die Sidelink-Datentransportressourcen anbieten, die mit ihren Positionen gespeichert sind, wobei die Datentransportplattform einen Anforderungsmanager umfasst, der konfiguriert ist zum:
Empfangen einer Anforderung von einer IdD-Kommunikationsvorrichtung, die einen Bedarf eines physischen Transports von Daten aufweist, wobei die Anforderung eine Aufnahmeposition, die eine Position der IdD-Kommunikationsvorrichtung ist, an der Daten aufzunehmen sind, und eine Abladeposition umfasst,
Auswählen mindestens einer Transportvorrichtung aus der Liste von registrierten Transportvorrichtungen gemäß einer Position der Transportvorrichtung zur Zeit der Anforderung in Bezug auf die Position der IdD-Kommunikationsvorrichtung,
Senden einer Datentransportmission an die ausgewählte Transportvorrichtung, wobei die Datentransportmission die Aufnahmeposition und die Abladeposition umfasst, und
Senden von Informationen zu der ausgewählten Transportvorrichtung an die IdD-Kommunikationsvorrichtung, um sich mittels Sidelink mit der ausgewählten Transportvorrichtung zu verbinden, damit die ausgewählte Transportvorrichtung den physischen Transport von Daten übernimmt.

7. Datentransportplattform nach Anspruch 6, wobei die Datentransportplattform als ein Web-Dienst bereitgestellt wird.

8. Datentransportplattform nach Anspruch 6, umfassend einen Verfügbarkeitsmonitor, der dazu konfiguriert ist, eine Verfügbarkeit der registrierten Transportvorrichtungen zu überwachen und somit eine Liste verfügbarer Transportvorrichtungen der registrierten Transportvorrichtungen zu erzeugen.

9. Datentransportplattform nach einem der Ansprüche 6 bis 8, wobei der Verfügbarkeitsmonitor dazu konfiguriert ist, auf Transportvorrichtungen zu antworten, die mit der Datentransportplattform auf das Vorliegen von zu transportierenden Daten prüfen.

10. Datentransportplattform nach einem der Ansprüche 6 bis 9, die dazu konfiguriert ist, physische Trajektorien der registrierten Transportvorrichtungen zu überwachen und zu speichern, um einen physischen Transport von Daten von der Aufnahmeposition zu der Abladeposition zu ermöglichen.

11. Transportvorrichtung (TD), die Sidelink-Ressourcen für einen physischen Transport von Daten anbietet und vorläufig bei einer Datentransportplattform (DTP) nach einem der Ansprüche 6 bis 10 registriert wird, wobei die Transportvorrichtung einen Datentransportmanager umfasst, der konfiguriert ist zum:
Empfangen einer Datentransportmission von der Datentransportplattform, umfassend eine Aufnahmeposition, die eine Position einer Kommunikationsvorrichtung des Internets der Dinge, IdD, die einen Bedarf eines physischen Transports von Daten aufweist, (RCD) ist, an der Daten aufzunehmen sind, und eine Abladeposition;
Aktivieren von hoher Sidelink-Erfassung und Signalemissionsdichte gemäß der Datentransportmission bei Erreichen einer Nähe der Aufnahmeposition;
Hochladen der zu transportierenden Daten mittels Sidelink von der IdD-Kommunikationsvorrichtung, sobald ein Sidelink mit der IdD-Vorrichtung erstellt wurde;
Speichern der hochgeladenen Daten; und
Abladen der hochgeladenen Daten bei Erreichen der Abladeposition.

12. Transportvorrichtung nach Anspruch 11, die dazu konfiguriert ist, regelmäßig auf das Vorliegen der zu transportierenden Daten mit der Datentransportplattform zu prüfen.

13. Kommunikationsvorrichtung (RCD) des Internets der Dinge, IdD, die einen Bedarf eines physischen Transports von Daten zwischen einer Aufnahmeposition, die eine Position der IdD-Kommunikationsvorrichtung ist, an der Daten aufzunehmen sind, und einer Abladeposition aufweist, wobei die IdD-Kommunikationsvorrichtung konfiguriert ist zum:
Zugreifen auf eine Datentransportplattform (DTP) nach einem der Ansprüche 6 bis 10;
Einreichen einer Anforderung von Datentransport, einschließend die Aufnahmeposition und die Abladeposition;
Empfangen von Informationen zu einer Transportvorrichtung(TD), die von der Datenplattform ausgewählt wird, um sich mittels Sidelink mit der Transportvorrichtung zu verbinden, damit die ausgewählte Transportvorrichtung den physischen Transport von Daten übernimmt; und
Übertragen der Daten an die Transportvorrichtung mittels Sidelink, sobald ein Sidelink mit der Transportvorrichtung erstellt wurde.

## Revendications

1. Procédé pour gérer, de manière centralisée, au moyen d'une plateforme de transport de données (DTP), des demandes provenant de dispositifs de communication de l'Internet des objets (IoT) ayant des besoins de transport physique de données entre des positions des dispositifs de communication IoT où les données doivent être collectées et une position de déchargement, ladite plateforme de transport de données comprenant une liste de dispositifs de transport (TD) enregistrés offrant des ressources de transport de données en liaison latérale stockées avec les positions des dispositifs de transport enregistrés, ledit procédé comprenant les étapes suivantes mises en œuvre par la plateforme de transport de données :
- la réception d'une demande d'un dispositif de communication IoT ayant des besoins de transport physique de données, la demande comprenant une position de collecte, qui est une position du dispositif de communication IoT où les données doivent être collectées, et une position de déchargement,
- la sélection d'un dispositif de transport parmi la liste des dispositifs de transport enregistrés selon la position du dispositif de transport au moment de la demande par rapport à la position du dispositif de communication IoT,
- l'envoi, au dispositif de transport sélectionné, d'une mission de transport de données, la mission de transport de données comprenant la position de collecte et la position de déchargement, et
- l'envoi, au dispositif de communication IoT, d'informations relatives au dispositif de transport sélectionné afin d'établir une connexion, via une liaison latérale, avec le dispositif de transport sélectionné pour que le dispositif de transport sélectionné prenne en charge le transport physique des données.

2. Procédé selon la revendication 1, comprenant en outre, par le dispositif de transport sélectionné, une fois que ledit dispositif de transport sélectionné a atteint la position de collecte :
l'activation d'une forte densité de détection et d'émission de signaux sur la liaison latérale, conformément à la mission de transport de données, lorsque le dispositif de transport sélectionné se trouve à proximité de la position de collecte,
le téléversement, depuis le dispositif de communication IoT, des données à transporter,
le stockage des données téléversées, et
le déchargement des données téléversées une fois la position de déchargement atteinte.

3. Procédé selon la revendication 1, comprenant la fourniture d'un secret commun au dispositif de communication IoT et au dispositif de transport sélectionné, le secret commun comprenant des informations relatives au dispositif de transport sélectionné et à la mission de transport de données.

4. Procédé selon l'une quelconque des revendications précédentes, dans lequel la position de déchargement comprend un point de déchargement qui est un réseau public ou un point LAN ouvert.

5. Procédé selon l'une quelconque des revendications précédentes, comprenant une étape consistant à déterminer un coût pour le transport physique des données et à proposer un prix associé au transport physique des données, conjointement avec les informations relatives au dispositif de transport sélectionné et à la mission de transport des données.

6. Plateforme de transport de données (DTP) pour centraliser des besoins de transport physique de données de dispositifs de communication (RCD) de l'Internet des objets (IoT), ladite plateforme de transport de données comprenant une liste de dispositifs de transport (TD) enregistrés offrant des ressources de transport de données en liaison latérale stockées avec leurs positions, ladite plateforme de transport de données comprenant un gestionnaire de demande configuré pour :
recevoir une demande d'un dispositif de communication IoT ayant des besoins de transport physique de données, la demande comprenant une position de collecte, qui est une position du dispositif de communication IoT où les données doivent être collectées, et une position de déchargement,
sélectionner au moins un dispositif de transport parmi la liste des dispositifs de transport enregistrés selon la position du dispositif de transport au moment de la demande par rapport à la position du dispositif de communication IoT,
envoyer, au dispositif de transport sélectionné, une mission de transport de données, la mission de transport de données comprenant la position de collecte et la position de déchargement, et
envoyer, au dispositif de communication IoT, des informations relatives au dispositif de transport sélectionné afin d'établir une connexion, via une liaison latérale, avec le dispositif de transport sélectionné pour que le dispositif de transport sélectionné prenne en charge le transport physique des données.

7. Plateforme de transport de données selon la revendication 6, dans laquelle ladite plateforme de transport de données est fournie sous la forme d'un service Web.

8. Plateforme de transport de données selon la revendication 6, comprenant un dispositif de surveillance de disponibilité configuré pour surveiller la disponibilité des dispositifs de transport enregistrés et générer ainsi une liste des dispositifs de transport disponibles parmi les dispositifs de transport enregistrés.

9. Plateforme de transport de données selon l'une quelconque des revendications 6 à 8, dans laquelle le dispositif de surveillance de disponibilité est configuré pour répondre aux dispositifs de transport qui vérifient auprès de la plateforme de transport la présence des données à transporter.

10. Plateforme de transport de données selon l'une quelconque des revendications 6 à 9, configurée pour surveiller et stocker les trajectoires physiques des dispositifs de transport enregistrés afin de permettre un transport physique des données de la position de collecte jusqu'à la position de déchargement.

11. Dispositif de transport (TD) offrant des ressources de liaison latérale pour le transport physique de données et étant préalablement enregistré sur une plateforme de transport de données (DTP) selon l'une quelconque des revendications 6 à 10, ledit dispositif de transport comprenant un gestionnaire de transport de données configuré pour :
recevoir, en provenance de la plateforme de transport de données, une mission de transport de données comprenant une position de collecte, qui est une position d'un dispositif de communication de l'Internet des objets (IoT) ayant des besoins pour le transport physique des données (RCD) où les données doivent être collectées, et une position de déchargement ;
activer une forte densité de détection et d'émission de signaux sur la liaison latérale, conformément à la mission de transport de données, lorsqu'une proximité de la position de collecte est atteinte ;
téléverser, via une liaison latérale, les données à transporter depuis le dispositif de communication IoT, une fois qu'une liaison latérale a été établie avec le dispositif IoT ;
stocker les données téléversées ; et
décharger les données téléversées une fois la position de déchargement atteinte.

12. Dispositif de transport selon la revendication 11, configuré pour vérifier régulièrement la présence des données à transporter auprès de la plateforme de transport de données.

13. Dispositif de communication (RCD) de l'Internet des objets (IoT) ayant des besoins de transport physique de données entre une position de collecte, qui est une position du dispositif de communication IoT où les données doivent être collectées, et une position de déchargement, ledit dispositif de communication IoT étant configuré pour :
accéder à une plateforme de transport de données (DTP) selon l'une quelconque des revendications 6 à 10 ;
soumettre une demande de transport de données comprenant la position de collecte et la position de déchargement ;
recevoir des informations relatives à un dispositif de transport (TD) sélectionné par la plateforme de données afin d'établir une connexion, via une liaison latérale, avec le dispositif de transport pour que le dispositif de transport sélectionné prenne en charge le transport physique des données ; et
transmettre les données au dispositif de transport via une liaison latérale une fois qu'une liaison latérale a été établie avec le dispositif de transport.
